# EUROPEAN PATENT SPECIFICATION

(11) **EP 4 132 730 B1**
(45) Date of publication and mention of the grant of the patent: **26.02.2025**
(21) Application number: 21745915.5
(22) Date of filing: 23.06.2021
(51) Int. Cl.: B05C 17/01

(54) **DISPENSER AND METHOD OF OPERATING A DISPENSER**
SPENDER UND VERFAHREN ZUM BETRIEB EINES SPENDERS
DISTRIBUTEUR ET PROCÉDÉ DE FONCTIONNEMENT D'UN DISTRIBUTEUR

(30) Priority: 30.06.2020 EP 20183209
(43) Date of publication of application: 15.02.2023
(73) Proprietor: medmix Switzerland AG, 9469 Haag (Rheintal) (CH)
(72) Inventor: RICHTER, Marcel, 6800 Feldkirch (CH); ZACHARIAS, Thomas, 8405 Winterthur (CH)
(74) Representative: Manitz Finsterwald Patent- und Rechtsanwaltspartnerschaft mbB
(86) International application number: PCT/EP2021/067183
(87) International publication number: WO 2022/002725

(56) References cited:
- EP-A1- 3 210 676
- FR-A5- 2 071 023
- US-A- 5 203 476

## Description

The present invention relates to a dispenser for cartridges, comprising a cartridge section for arranging the cartridge, and a handle section, whereby the handle section comprises a housing and a driving mechanism arranged in the housing to drive a driving rod in a longitudinal direction into a cartridge arranged in the cartridge section to exert pressure on a medium stored in the cartridge. Further, the present invention relates to a method of operating a dispenser for cartridges, the dispenser comprising a cartridge section for arranging the cartridge and a driving mechanism to drive a driving rod of the dispenser in a longitudinal direction into a cartridge arranged in the cartridge section to exert pressure on a medium stored in the cartridge.

Dispensers for cartridges are well known in the state of the art, see for instance FR 2 071 023 A5. Such dispensers can be used for different cartridges containing a wide variety of materials, for instance adhesives or sealing compounds. A cartridge containing the desired medium is arranged in the cartridge section of the dispenser and in the following, a driving rod is driven into the cartridge. The driving rod can for instance be manually actuated by a respective driving mechanism of the dispenser.

A toggle lever is a mechanical element to mechanically connect different elements of a mechanism. For the toggle lever, a first lever arm and a second lever arm are pivotably connected by a hinge in between. Hence, during actuation, a linear movement of the respective free ends of the lever arms in a first direction results in a movement of the hinge perpendicular to this first direction. At the end of such a movement, when the two lever arms are arranged almost collinearly, a large movement of the hinge results in only tiny movements of the free ends of the lever arms, resulting in a high power gear ratio. On the opposite end of the movement, when the two lever arms are arranged almost parallel, the toggle lever provides the converse behavior, a tiny movement of the hinge results in large movements of the free ends of the lever arms, resulting in a low power gear ratio.

The aforementioned behavior of a toggle lever already illustrates the advantages and drawbacks of an application of such toggle levers in the driving mechanism of a dispenser. On the one hand, for certain parts of the actuation movement, a high pressure can be exerted on the medium stored in the respective cartridge. On the other hand, the power gear ratio changes during the movement of the toggle lever, in particular during the relative movement of the two lever arms, and hence also the pressure exerted on the medium in the cartridge changes. This effect results in a non-constant volume of the medium dispensed over time by the respective dispenser.

In view of the above, it is an object of the present invention to provide an improved dispenser and an improved method of operating a dispenser, which do not have the aforementioned drawbacks of the state of the art. In particular, it is an object of the present invention to provide a dispenser with a toggle lever and a method of operating a dispenser with a toggle lever, wherein the toggle lever provides an at least approximately constant power gear ratio and additionally in which a uniformity of an amount of the provided medium per time unit and hence a flow rate of the medium provided by the dispenser according to the present invention is improved during its operation.

This objective is solved by the patent claims. In particular, this objective is solved by a dispenser according to claim 1 and by a method of operating a dispenser according to claim 15. The dependent claims describe preferred embodiments of the invention. Details and advantages described with respect to a dispenser according to the first aspect of the invention also hold true for a method according to the second aspect of the invention and vice versa, if of technical sense.

According to a first aspect of the invention the objective is solved by a dispenser for cartridges, comprising a cartridge section for arranging the cartridge, and a handle section, whereby the handle section comprises a housing and a driving mechanism arranged in the housing to drive a driving rod in a longitudinal direction into a cartridge arranged in the cartridge section to exert pressure on a medium stored in the cartridge, the driving mechanism comprising:
- a toggle lever with a first lever part, a hinge section and a second lever part, the first lever part pivotably mounted in the housing, the second lever part in operative connection with the driving rod to move the driving rod, and the hinge section pivotably connecting the first lever part and the second lever part around a hinge axis,
- a trigger mechanism to provide a driving force for a movement of the driving rod via the toggle lever, and
- a transfer mechanism arranged between the trigger mechanism and the toggle lever providing an operative connection between the trigger mechanism and the toggle lever,
wherein the transfer mechanism comprises an undulating transfer surface with several prominent catches for contacting the hinge section of the toggle lever to provide an operative connection to the toggle lever, whereby an application of the driving force by the trigger mechanism moves the transfer surface in a driving direction at least partly essentially parallel to the longitudinal direction and the prominent catches of the undulating transfer surface repeatedly move the hinge section perpendicular to the longitudinal direction.

A dispenser according to the present invention can be used for applying a medium stored in a cartridge onto a surface. Different media, such as adhesives or sealing agents, are possible, as long as they can be contained in a respective cartridge. The dispenser comprises a cartridge section for arranging the cartridge, wherein preferably the cartridge section is adaptably formed to form fit at least a part of the cartridge. Also a fixing of the cartridge within the cartridge section is possible, for instance by clipping the cartridge into the cartridge section. The dispenser further comprises a driving rod to exert pressure on the medium stored in a cartridge arranged in the cartridge section. For this, the driving rod can be driven along a longitudinal direction into the cartridge. The driving rod can preferably be arranged centered with respect to the respective cartridge and hence form a central rod. Preferably, at the end of the driving rod a pressure disc is arranged to distribute the exerted pressure on the complete cross section of the cartridge.

Further, the dispenser according to the present invention comprises a handle section for a preferably manual operation of the dispenser. The handle section comprises a housing and arranged within the housing a driving mechanism. The driving mechanism comprises elements to drive the aforementioned driving rod. In particular, the driving mechanism at least comprises a toggle lever mechanically connected to the driving rod, a trigger mechanism to provide an underlying driving force and a transfer mechanism to transfer the driving force of the trigger mechanism to the toggle lever and in the end to the driving rod.

The toggle lever comprises a first lever part and a second lever part, wherein the two lever parts are pivotably connected via a hinge section. Preferably, the hinge section is connected with an end of the first and second lever part, respectively. Further, the first lever part, in particular an end of the first lever part opposed to the hinge section, is pivotably mounted in the housing of the dispenser. Hence pivoting the first lever part within the housing is possible, however limited. Additionally, the second lever part, in particular an end of the second lever part opposed to the hinge section, is in operative connection with the driving rod. The operative connection in question can comprise additional levers, connecting rods, gears or similar elements. In summary, a movement of the hinge section results in a, preferably perpendicular and/or in the longitudinal direction, movement of this end of the second lever part mechanically connected to the driving rod, as the first lever part is, albeit pivotably, fixed within the housing. In other words, a movement of the hinge section results in an exertion of pressure on the medium stored in the cartridge.

The aforementioned trigger mechanism provides the underlying driving force for the operation of the dispenser according to the present invention. For instance, the trigger mechanism can be manually actuated. In particular, the driving force provided by the trigger mechanism is transferred via the toggle lever described above to result in a movement of the driving rod.

For this task, the transfer mechanism is arranged between the trigger mechanism and the toggle lever. In particular, the transfer mechanism is mechanically connected to both the trigger mechanism and the toggle lever, respectively, and hence provides an operative connection between these elements. Hence, the driving force provided by the trigger mechanism is transferred by the transfer mechanism to the toggle lever and finally causes a movement of the driving rod.

The transfer mechanism is the main inventive element of the dispenser according to the present invention. Especially, the transfer mechanism comprises an undulating transfer surface with several prominent catches. In particular, the prominent catches can form the undulating part of the transfer surface protruding from an otherwise essentially smooth surface. The prominent catches are distinct from each other, wherein along the transfer surface the prominent catches can be arranged distanced or direct next to each other.

The prominent catches provide the operative connection of the transfer section to the toggle lever by contacting the hinge section of the toggle lever. In particular, the transfer mechanism is also mechanically connected to the trigger mechanism such that the driving force provided by the trigger mechanism causes a movement of the transfer surface in a driving direction at least partly essentially parallel to the longitudinal direction. In other words, during a provision of the driving force of the trigger mechanism and the associated movement of the transfer surface, the transfer surface and hence the prominent catches are moved with respect to the hinge section. As the prominent catches protrude from the otherwise smooth transfer surface, the hinge section is forced in a direction perpendicular to the transfer surface while the prominent catches pass by. Due to the fact that the transfer surface comprises several prominent catches and that the transfer surface moves at least at the interaction point with the toggle lever parallel to the longitudinal direction, the hinge section is repeatedly moved perpendicular to the longitudinal direction.

In summary, during the application of the driving force, the transfer surface moves with respect to the toggle lever, in particular with respect to the hinge section. Hence several of the prominent catches pass by the hinge section and each of the prominent catches moves the hinge section a small amount perpendicular to the longitudinal direction.

After the passing by of the respective prominent catch, the hinge section moves back into its initial position. In other words, during the application of the driving force, the hinge section repeatedly moves back and forth always the same small distance perpendicular to the longitudinal direction. The sameness of the distance in turn provides an at least approximately constant power gear ratio. Further, also the power gear ratio can be improved by that as the amplification effect of the toggle lever can be utilized more effectively.

In addition, by adjusting a mean angle between the first lever part and the second lever part, the aforementioned power gear ratio can be adjusted, whereby a small angle leads to a low power gear ratio, a large angle leads to a high power gear ratio. Preferably a mean angle between the first and second lever part close to 180°, in particular a mean angle larger 170°, can be chosen to provide an especially high power gear ratio. Further, the movement of the hinge section causes also the second lever part, provided by the operative connection to the driving rod, to repeatedly push the driving rod in the longitudinal direction.

The duration of the movement of the driving rod can be adjusted by the number of repetitions of the movements of the hinge section. In other words, the higher the number of repetitions of the movements of the hinge section is provided, caused by passing by of prominent catches of the transfer surface at the position of the hinge section, the longer a duration of the essential constant movement of the driving rod can be provided. The aforementioned at least approximately constant power gear ratio results in an at least approximately movement of the driving rod proportional to the driving force, and hence, if an at least approximately constant driving force is provided, an at least approximately constant flow rate of the medium to be dispersed by the dispenser according to the present invention can be achieved.

Further, the dispenser according to the present invention can comprise that the operative connection between the second lever part and the driving rod is provided using a pressure plate in operative connection with both the second lever part and the driving rod, respectively. A pressure plate is a mechanically especially simple element for providing an operative connection between the second lever part and the driving rod. For instance, the second lever part can be directly pivotably mounted on the pressure plate and/or the driving rod can be arranged in an opening of the pressure plate. Thereby, the second lever part induces a rocking movement of the pressure plate which in turn repeatedly pushes the driving rod in the longitudinal direction.

The dispenser according to the present invention can be characterized in that the transfer surface is arranged at a continuous and revolving element, in particular wherein the continuous and revolving element is a belt or a chain. As mentioned above, an at least essentially continuous movement of the driving rod along the longitudinal direction is based on the number of repetitions of the movements of the hinge section. These movements in return are caused by the several prominent catches arranged at the transfer surface.

By using a continuous and revolving element as transfer surface, each of the prominent catches arranged at the transfer surface can be repeatedly used, each time when the continuous and revolving element has completed a full revolution. The duration of the essential constant movement of the driving rod can thereby be extended, essentially up to a full depletion of the cartridge in use. Further, a continuous and revolving element can be easily adjusted to constraints of the dispenser according to the present invention, for instance with respect to an available space within the housing of the dispenser. Belts and chains are preferable examples of continuous and revolving elements.

Alternatively, the dispenser according to the present invention can be characterized in that the transfer surface is arranged at a peripheral surface of a rotatable gear. Also a rotatable gear provides all advantages of a repeated usage of each of the prominent catches as already mentioned above with respect to a continuous and revolving element. In distinction to the continuous and revolving element, a rotatable gear is solid and hence firmer. This can be advantageous especially for dispensers according to the present invention with small internal free space.

As a further alternative, the dispenser according to the present invention can provide that the transfer surface is arranged at an at least essentially even component, in particular wherein the transfer surface is formed as a toothed rack. In difference to the embodiments described above, an at least essentially even component is not revolving. In contrast, the whole component preferably moves back and forth along the longitudinal direction, causing in at least one of the moving directions the aforementioned repeated movements of the hinge section.

For instance, the component can move on a linear path, whereby the back and forth movement of the component preferably coincide. Alternatively, the component can move along an elliptical path. A toothed rack is an essentially simple embodiment of such an at least essentially even component.

Preferably, the dispenser according to the present invention can be characterized in that the prominent catches are formed as triangular teeth. A triangular tooth can provide a prominent catch especially easily as a base of the triangular tooth can be arranged at the smooth part of the transfer surface and the other two sides of the triangular tooth form the prominent catch protruding from this surface.

**In** addition, by choosing a height of the tooth the distance of the movement of the hinge section perpendicular to the longitudinal direction can be easily adjusted. Further, a steepness of sides of the triangular tooth, especially of the side facing the hinge section during movement of the transfer section, influences and hence can be adaptably chosen to adjust the force needed to move the hinge section, the steeper, the higher is the force needed. Hence an adaption of the dispenser according to the present invention on constraints with respect to these features can be provided easily.

**In** particular, the dispenser according to the present invention can be improved by that the triangular teeth are asymmetrically formed, wherein a first side of the respective triangular tooth inclined forward with respect to the driving direction is less steep than a second side of the respective triangular tooth inclined backward with respect to the driving direction, in particular wherein the second side is perpendicular to the driving direction.

At a transfer surface moved in driving direction, the first side of the triangular teeth displaces the hinge section in a first movement perpendicular to the driving direction, in particular to the longitudinal direction. Accordingly, the second side provides and/or assists the opposed second movement. A less steep first side with respect to the second side allows providing a dispenser according to the present invention, in which the second movement is performed faster than the first movement. As only the first movement is relevant for the pushing of the driving rod, this provides the advantage that the breaks during the pushing of the driving rod caused by the second movement can be reduced. By a second side perpendicular to the driving direction a duration and hence an influence of these breaks can be minimized.

**In** addition, the dispenser according to the present invention can be characterized in that the transfer mechanism comprises two or more different undulating transfer surfaces, each comprising several prominent catches, wherein only one of the at least two transfer surfaces is active and hence used to provide the operative connection to the toggle lever, further the driving mechanism, especially the transfer mechanism, comprises a switching mechanism to change the active transfer surface, in particular wherein the at least two transfer surfaces are arranged next to each other perpendicular with respect to the driving direction. In this embodiment, the dispenser according to the present invention comprises at least two undulating transfer surfaces.

In particular, these surfaces are different and hence also the respective operative connections to the hinge section provided by the respective transfer surface are different. For instance, the different transfer surfaces can comprise prominent catches with different shapes and/or sizes.

Alternatively or additionally, a distance between the prominent catches along the driving direction on the respective transfer surface can differ between the at least two transfer surfaces.

Further, a switching mechanism is provided for changing the active transfer surface. In other words, the switching mechanism, which can be provided as part of the driving mechanism, preferably of the transfer mechanism, enables the user of the dispenser according to the present invention to actively choose which transfer surface is to be used and hence which effective operational connection between the trigger mechanism and the driving rod is to be established. An adaptation of the dispenser according to the present invention as a whole on external constraints, for instance the medium to be applicated or the flow rate needed for the present usage of the dispenser according to the present invention can be improved.

Especially, the switching between the different transfer surfaces can be provided more easily, if the at least two transfer surfaces are arranged next to each other perpendicular with respect to the driving direction. In this special embodiment, only the transfer surface has to be moved and all other components, especially the toggle lever and the driving rod, can stay fixed at their mounting position within the dispenser according to the present invention.

Preferably the dispenser according to the present invention can comprise that the trigger mechanism comprises an electric motor element providing the driving force. In particular in embodiments of the dispenser in which the transfer surface is arranged at a continuous and revolving element or at a peripheral surface of a rotatable gear, an uninterrupted movement of the transfer surface and hence of the driving rod can be easily provided by providing the driving force by an electric motor element.

Additionally or alternatively, the dispenser according to the present invention can be characterized in that the trigger mechanism comprises a trigger lever pivotably mounted in the housing between a rest position and an activated position, the trigger lever providing the driving force, wherein in particular a ratchet mechanism provides an operative connection between the trigger lever and the transfer mechanism.

Preferably, a trigger lever can be actuated manually. This provides a more direct influence on the flow rate, as the actuation motion, in particular a velocity of this motion, of the trigger lever out of its rest position onto its activated position directly influences the driving force and hence the movement of the driving rod into the cartridge. By implementing a ratchet mechanism it can be ensured that during the opposed movement of the trigger lever from its activated position in its rest position, the mechanical connection to the transfer mechanism is disconnected. An influence of this motion onto the movement of the driving rod can therefore easily be prohibited.

**In** addition, the dispenser according to the present invention can be improved in that the transfer mechanism comprises a main body with a first operation section for providing an operative connection to the trigger lever and a second operation section comprising the transfer surface for providing an operative connection to the toggle lever. In other words, the main body comprises two special sections, each of them specialized for providing an operative connection suitable for the trigger level and the toggle lever, respectively.

By providing distinct and separate sections of the main body for these tasks, both the first operation section and the second operation section, respectively, can be adapted to the special needs of the respective operative connection, in particular independent of the respective other operative connection.

Preferably, in a further improved embodiment, the dispenser according to the present invention can comprise that the first operation section comprises a long slot and the trigger lever comprises a pin engaging the long slot of the first operation section, in particular wherein a major extension of the long slot is perpendicular or at least essentially perpendicular to the longitudinal direction and/or the driving direction.

A pin at the end of the trigger lever essentially moves along a circular path during the motion of the trigger lever from its rest position into its activated position. By engaging a long slot as part of the first operation section by this pin, the motion of the trigger lever can essentially be transferred into a longitudinal movement of the main body.

In particular by orientating the major extension of the long slot perpendicular to the longitudinal direction, the movement of the main body will follow the longitudinal direction. As the transfer surface is arranged as second operation on the main body, a movement of the transfer section along the longitudinal direction can be easily provided.

In addition, the dispenser according to the present invention can be characterized in that the dispenser comprises a cartridge section designed to receive one of a multi-component cartridge with two or more cartridge chambers or two or more individual cartridges having a respective cartridge chamber and correspondingly two or more driving rods engaging said cartridge chambers, further the driving mechanism comprises a transmission mechanism to provide an operative connection to move the corresponding driving rod.

In other words, in this embodiment of the dispenser according to the present invention more than one medium can be applicated at the same time. In particular, also a mixture of two or more media, mixed after application on the surface to be applicated or pre-mixed within a suitable mixing element of the dispenser, can be provided. Hence an area of application for the dispenser according to the present invention can be enlarged.

In a further improved embodiment of the dispenser according to the present invention, the transmission mechanism comprises two or more corresponding transfer mechanisms, whereby each of the transfer mechanisms is in operation connection with the trigger mechanism, and wherein the respective driving mechanism comprises two or more corresponding toggle levers in operative connection with the corresponding driving rod, in particular via a pressure plate, to move the corresponding driving rod, whereby each of the toggle levers is in operation connection with the transfer surface of one of the transfer mechanisms. In this embodiment, a single trigger mechanism provides the driving force for several transfer mechanisms and via the respective toggle levers for the respective driving rods.

In particular, the transmission mechanism comprises a respective pair of transfer mechanism and toggle lever for each of the driving rods to be driven. The respective resulting operative connection can be chosen identical or different, corresponding to the constraints of the special embodiment of the dispenser according to the present invention. All features and advantages described above with respect to a single combination of a transfer surface and a toggle lever can be provided by each of the respective combinations of this special embodiment of the dispenser according to the present invention with a transmission mechanism comprising two or more combinations of transfer mechanism and toggle lever.

An improved embodiment of the dispenser according to the present invention can be characterized in that at least one of the transfer mechanisms comprises two or more transfer surfaces, whereby each of the transfer surfaces is in operation connection with at least one of the toggle levers, in particular wherein at least two of the transfer surfaces are formed differently to provide different pressures exerted on the media stored in the corresponding cartridges. By providing a transfer mechanism which comprises at least two transfer surfaces in operation connection with at least two toggle levers, the number of fully independent transfer mechanisms can be reduced. This simultaneously helps to reduce the need for available space within the dispenser, the internal complexity of the mechanical components of the dispenser, and also the production cost. In particular, by providing two different transfer surfaces, even an adaptation with respect to the media in the respective cartridges can be provided.

According to a second aspect the present invention relates to a method of operating a dispenser for cartridges in accordance with the first aspect of the invention, the dispenser comprising a cartridge section for arranging the cartridge and a driving mechanism to drive a driving rod of the dispenser in a longitudinal direction into a cartridge arranged in the cartridge section to exert pressure on a medium stored in the cartridge, wherein the driving mechanism comprises a toggle lever in operative connection with the driving rod, in particular via a pressure plate, to move the driving rod, a trigger mechanism to provide a driving force for a movement of the driving rod via the toggle lever and a transfer mechanism with an undulating transfer surface with several prominent catches arranged between the trigger mechanism and the toggle lever providing an operative connection between the trigger mechanism and the toggle lever, characterized by the following steps:
a) Providing of a driving force by the trigger mechanism,
b) Moving of the undulating transfer surface in a driving direction at least partly essentially parallel to the longitudinal direction driven by the driving force provided in step a),
c) Repeatedly displacing of a hinge section of the toggle lever perpendicular to the longitudinal direction by a passing by of the prominent catches of the moving transfer surface, and
d) Moving the driving rod via the operative connection of the toggle lever with the driving rod.

A method according to the second aspect of the invention is intended to be carried out with a dispenser according to the first aspect of the invention. Therefore a method according to the second aspect of the invention can provide all features and advantages already described in detail with respect to a dispenser according to the first aspect of the invention.

Generally, a method according to the present invention is applicable by a dispenser with a toggle lever. The toggle lever contains a first lever part and a second lever part, facing ends of the lever parts pivotably connected at a hinge section of the toggle lever. The respective other end of the first lever part is pivotably mounted in a housing of the dispenser, the respective other end of the second lever part is in operative connection to the driving rod. Hence a movement of the hinge section results in a movement of the respective other end of the second lever part and thereby pushes the driving rod in the longitudinal direction. In particular, the operative connection between the second lever part and the driving rod can be provided via a pressure plate.

In step a) of the method according to the present invention an underlying driving force is provided, for instance by manually actuating a trigger lever and/or by an electric motor element.

According to the present invention, between the trigger mechanism and the toggle lever, a transfer mechanism is arranged. This transfer mechanism comprises an undulating transfer surface with several prominent catches protruding from the transfer surface, wherein the transfer surface is in operative connection to the toggle lever, in particular to its hinge section. In step b) of the method according to the present invention, this undulating transfer surface is moved driven by the driving force at least partly essentially parallel to the longitudinal direction.

In step c) of the method according to the present invention, this movement of the undulating transfer surface leads to repeated displacements of the hinge section. In other words, the prominent catches are passing by the hinge section by the movement of the undulating surface, and each of the prominent catches displaces the hinge section. As the transfer section is preferably moving along the longitudinal direction, this displacement is preferably perpendicular to the longitudinal direction.

In step d) of the method according to the present invention each of the repeated displacements of the hinge section results in a movement of the driving rod, provided by the operative connection of the toggle lever to the driving rod, as mentioned above for instance provided via the pressure plate. Despite the small dimension of each of the displacements, the repetition of these displacements results in an arbitrarily large movement of the driving rod.

In addition, the repeated displacements are similar, preferably identical. Hence the displacements always cover the same small distance perpendicular to the longitudinal direction. The sameness of the distance in turn provides an at least approximately constant power gear ratio. In addition, also the power gear ratio can be improved by that as the amplification effect of the toggle lever can be utilized more effectively. In summary, an at least approximately constant flow rate of the medium to be dispersed can be achieved by operating a dispenser by a method according to the present invention.

The present invention is further described hereinafter with reference to illustrated embodiments shown in the accompanying drawings. Elements of the same function are specified throughout the figures with the same reference signs. In the following, any statement made having regard to the direction of a component are made relative to the position shown in the drawing and can naturally vary in the actual position of application. The description of the accompanying drawings is only by the way of detail. Specific features of each aspect of the present invention and after figures can be combined with each other if of technical sense. The Figures schematically show:
- Fig. 1: a first embodiment of a dispenser according to the present invention,
- Fig. 2: a second embodiment of a dispenser according to the present invention,
- Fig. 3: a third embodiment of a dispenser according to the present invention with its trigger level in its rest position,
- Fig. 4: the dispenser embodiment of Fig. 3 with its trigger level in its activated position,
- Fig. 5: a forth embodiment of a dispenser according to the present invention,
- Fig. 6: a fifth embodiment of a dispenser according to the present invention, and
- Fig. 7: a sixth embodiment of a dispenser according to the present invention.

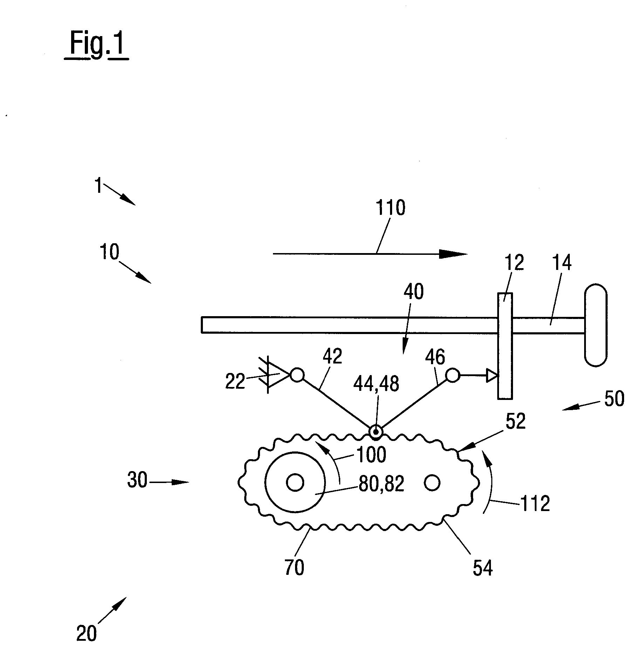

With respect to all figures, the Figs. 1 to 7 schematically show possible embodiments of a dispenser 1 according to the present invention. The dispenser 1 comprises a cartridge section 10 for arranging a cartridge. If depicted at all, out of the elements of the cartridge section 10, in particular only the driving rod 14 and the pressure plate 12 are shown. Further, all depicted dispensers 1 comprise a handle section 20. A housing 22 of the handling section 20 acts as casing and counter support for the driving mechanism 30 of the dispenser 1.

The driving mechanism 30 is mechanically connected to the pressure plate 12 to drive the driving rod 14 into a cartridge in the cartridge section 10 to finally exert pressure on a medium stored in the cartridge. According to the present invention, also driving mechanisms 30 without a pressure plate 12 for providing an operative connection to the driving rod 14 are possible.

The actual design of the driving mechanism 30 is the essential difference between different embodiments of the dispenser 1 according to the present invention.

All driving mechanisms 30 comprise a trigger mechanism 80 for providing a driving force 100, a toggle lever 40 in operative connection with the pressure plate 12 to move the driving rod 14 and a transfer mechanism 50 arranged between the trigger mechanism 80 and the toggle lever 40 providing an operative connection between the trigger mechanism 80 and the toggle lever 40, wherein the transfer mechanism 50 comprises an undulating transfer surface 52 with several prominent catches 70 for contacting a hinge section 44 of the toggle lever 40, the hinge section 44 pivotably connecting a first lever part 42 and a second lever part 46 of the toggle lever 40 around a hinge axis 48.

In the following, the basic operational principle of the dispenser 1 according to the present invention and the method of its operation according to the present invention are described with respect to the embodiment shown in Fig. 1. However, as all embodiments of the dispenser 1 according to the present invention share common elements, especially the toggle lever 40 and the transfer mechanism 50 with an undulating transfer surface 52 with several prominent catches 70 for contacting a hinge section 44 of the toggle lever 40, the description is valid for all embodiments of the dispenser 1 and the method, respectively, according to the present invention.

In Fig. 1, the undulating transfer surface 52 is arranged at a continuous and revolving element 54. Preferably this revolving element 54 is a belt or a chain. During the application of the driving force 100 in step a) of the method according to the present invention, in Fig. 1 provided by an electric motor 82 as part of the trigger mechanism 80, the transfer surface 52 moves with respect to the toggle lever 40 in a driving direction 112 at least partly essentially parallel to the longitudinal direction 110 as described in step b) of the method according to the present invention. Hence according to step c) of the method according to the present invention, several of the prominent catches 70 pass by the hinge section 44 and each of the prominent catches 70 moves the hinge section 44 a small amount perpendicular to the longitudinal direction 110.

After the passing by of the respective prominent catch 70, the hinge section 44 moves back into its initial position. In summary, the hinge section 44 repeatedly moves back and forth perpendicular to the longitudinal direction 110. In step d) of the method according to the present invention, this movement of the hinge section 44 causes also the second lever part 46, provided by the operative connection of the second lever part 46 to the pressure plate 12 and the bearing of the first lever part 42 at the housing 22, to repeatedly push the driving rod 14 in the longitudinal direction 110.

The duration of the movement of the driving rod 14 can be adjusted by the number of repetitions of the movements of the hinge section 44. In particular in the depicted embodiments of the dispenser 1 according to the present invention in which the transfer surface 52 is arranged at a continuous and revolving element 54, an uninterrupted movement of the transfer surface 52 and hence of the driving rod 14 can be easily provided by providing the driving force 100 by an electric motor element 82.

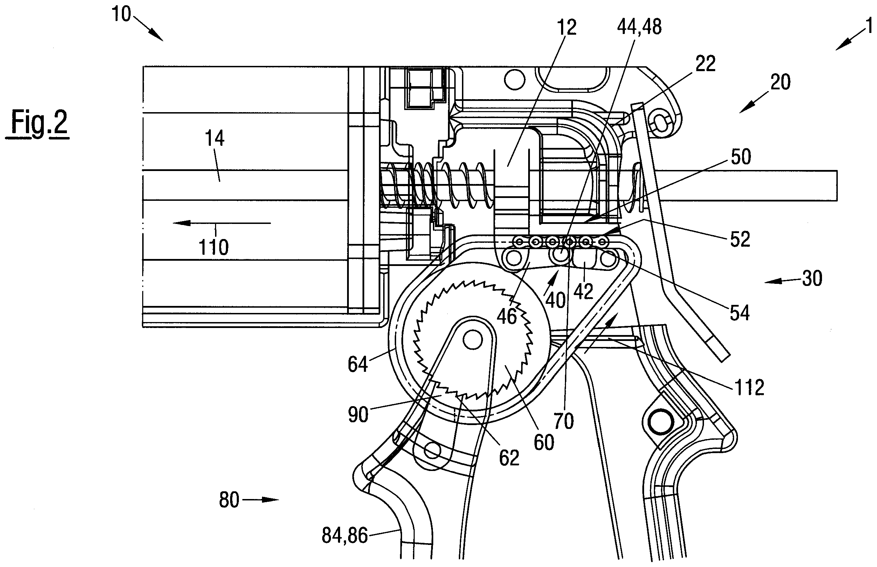

Fig. 2 shows a similar embodiment of the dispenser 1 according to the present invention as depicted in Fig. 1 in a more elaborate drawing. Especially, also in the embodiment of Fig. 2 the transfer surface 52 is arranged at a continuous and revolving element 54, in particular a chain. All features and advantages provided by such a continuous and revolving element 54 as transfer surface 52 described above with respect to Fig. 1 are also valid for the present embodiment.

In contrast to Fig. 1, in the embodiment of the disperser 1 according to the present invention depicted in Fig. 2 the trigger mechanism 80 comprises a trigger lever 84 as source of the driving force 100.

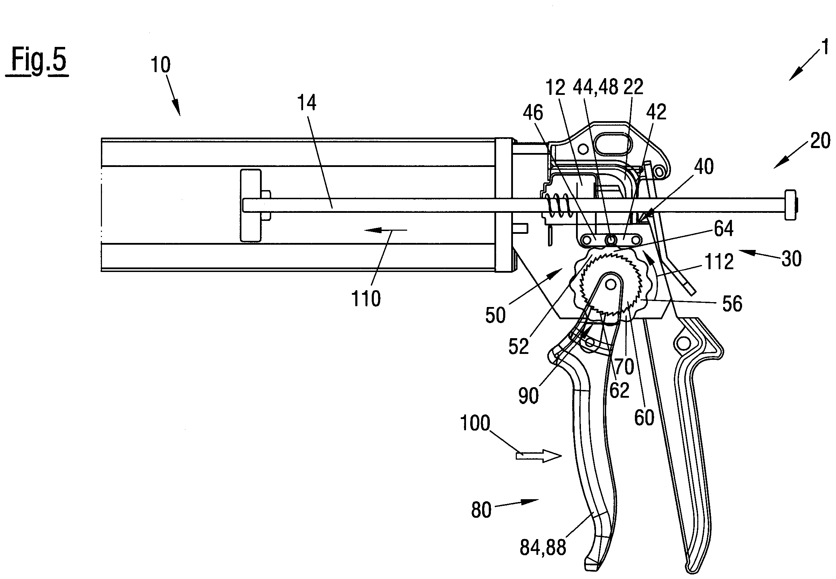

The trigger lever 84 is shown in its rest position 86 out of which it can be moved counterclockwise into its activated position 88, see for instance Fig. 5. Further, the transfer mechanism 50 comprises a main body 60, whereas the main body 60 comprises first operation section 62 for providing an operative connection to the trigger lever 84 and a second operation section 64 comprising the transfer surface 52.

In the depicted embodiment, the first operation section 62 comprises a ratchet mechanism 90. During a movement of the trigger lever 84 from its rest position 86 into its activated position 88, the ratchet mechanism 90 ensures a rotation of the main body 60 and hence a movement of the continuous revolving element 54 forming the transfer surface 52. During the opposed movement of the trigger lever 84 back into its rest position 86, the ratchet mechanism 90 prevents a movement of the main body 60.

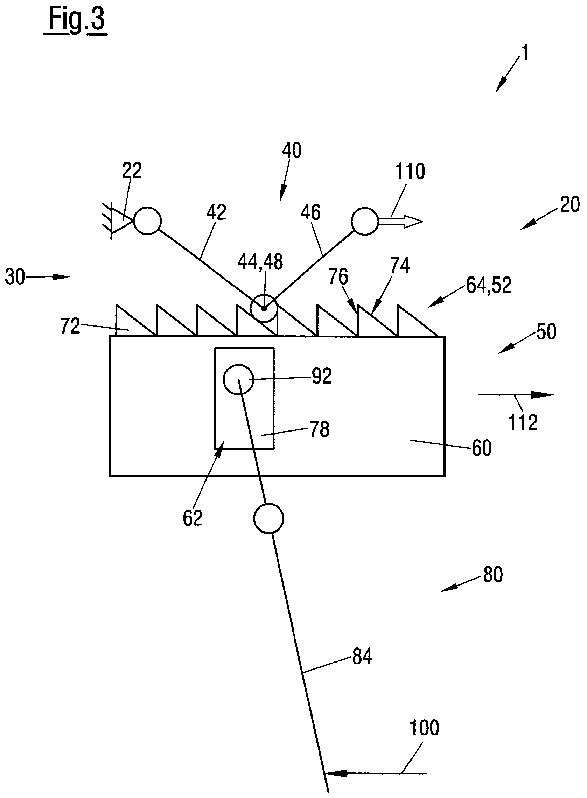

A different embodiment of the dispenser 1 according to the present invention is shown in Fig. 3. First of all, the used embodiment of the toggle lever 40 of the driving mechanism 30 is similar to the one described with respect to Fig. 1. In addition, also in this embodiment the trigger mechanism 80 comprises a trigger lever 84 as source of the driving force 100.

However, the transfer mechanism 50 is completely different to the respective transfer mechanism as shown in Figs. 1 and 2. The transfer mechanism 50 comprises a main body 60 with a first operation section 62 for providing an operative connection to the trigger lever 84 and a second operation section 64 comprising the transfer surface 52 for providing an operative connection to the toggle lever 40.

**In** the depicted embodiment, the first operation section 62 comprises a long slot 78 and the trigger lever comprises a pin 92 engaging the long slot 78, whereby a major extension of the long slot 78 is perpendicular to the longitudinal direction 110. During application of the driving force 100, the pin 92 essentially moves along a circular path. By engaging the long slot 78, the motion of the trigger lever 84 can essentially be transferred into a longitudinal movement of the main body 60 and hence the driving direction 112 of the transfer surface 52 is parallel to the longitudinal direction 110.

Further the transfer surface 52 as part of the second operation section 64 comprises prominent catches 70 which are formed as triangular teeth 72. **In** particular, in this embodiment the triangular teeth 72 are asymmetrically formed, wherein a first side 74 of the respective triangular tooth inclined forward with respect to the driving direction 112 is less steep than a second side 76 of the respective triangular tooth 72 inclined backward with respect to the driving direction 112, in particular even perpendicular to the driving direction 112.

During operation, the transfer surface 52 moves in driving direction 112 and the first side 74 of the triangular teeth 72 displaces the hinge section 44 of the toggle lever 40. After passing the tip of the respective triangular tooth 72 at the end of the first side 74, the hinge section 44 immediately drops to the base of the next triangular tooth 72 and the next movement of the hinge section 44, caused by the first side 74 of the following triangular tooth 72, starts without any delay.

Preferably, the operative connection between the trigger lever 84, in particular the pin 92 at the upper end of the trigger lever 84, and the first operation section 62 of the main body 60, in particular the long slot 78, can be provided such that during application of the driving force 100 the driving direction 112 of the main body 60 is parallel or at least essentially parallel to the longitudinal direction 110. Thereby a particular smooth and uniform actuation of the trigger lever 40 can be provided.

Additionally, the aforementioned operative connection between the trigger lever 84 and the first operation section 62 of the main body 60 can be provided such that during the opposite movement of the trigger lever 84 back into its initial position the main body 60 is somewhat displaced vertically downwards to lift the operative connection between the second operation section 64 and the toggle lever 40 is lifted. Thereby the movement of the main body 60 opposite to the driving direction 112, which is linked to the movement of the trigger lever 84 back into its initial position, can be provided without any influence on the toggle lever 40 and hence on driving mechanism 30.

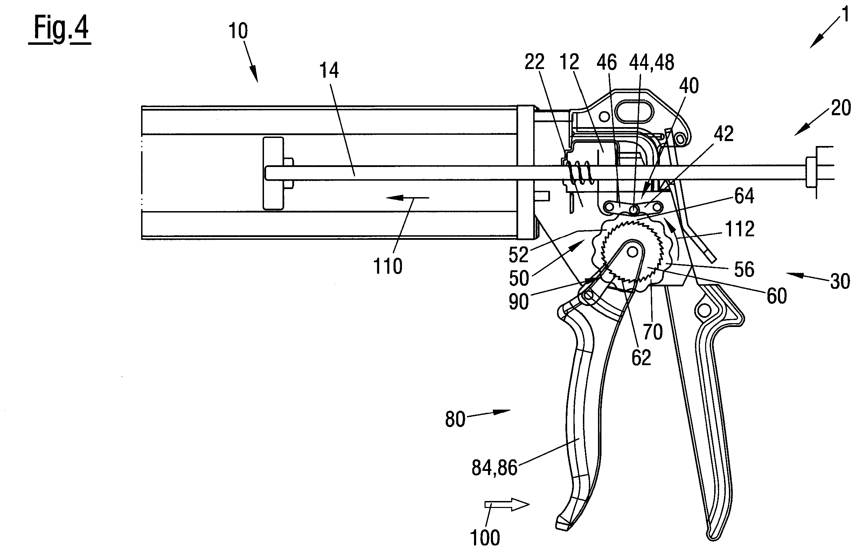

Fig. 4 and 5 show a further possible embodiment of a dispenser 1 according to the present invention, similar to the embodiment depicted in Fig. 2. In particular, the embodiment of Fig. 4 and 5 differs from the respective embodiment of Fig. 2 essentially only by the physical form of the transfer surface 52 and its prominent catches 70, which is arranged at a peripheral surface of a rotatable gear 56. The rotatable gear 56 again is part of the main body 60 of the driving mechanism 30.

Similar to the continuous and revolving element 54 depicted in Fig. 2, the rotatable gear 56 rotates along the driving direction 112 upon a movement of the trigger level 84 out of its rest position 86 by the driving force 100, see Fig. 4, into its activated position 88, see Fig. 5. By comparison of Fig. 4 and 5, the basic operational principle of the dispenser 1 is clearly visible. Due to the driving force 100 provided by the trigger lever 84, the rotatable gear 56 rotates along the driving direction 112.

The prominent catches 70 of the transfer surface 52, arranged at the peripheral surface of the rotatable gear 56, follow this movement and by the physical contact of one of the prominent catches 70 the hinge section 44 of the toggle lever 40 is displaced, in particular perpendicular to the longitudinal direction 110 of the dispenser 1. Due to the pivotably fixation of the first lever part 42 at the housing 22 and the operative connection between the second lever part 46 and the pressure plate 12, the driving rod 14 is driven in the longitudinal direction 110 to exert pressure onto a medium in a cartridge arranged in the cartridge section 10.

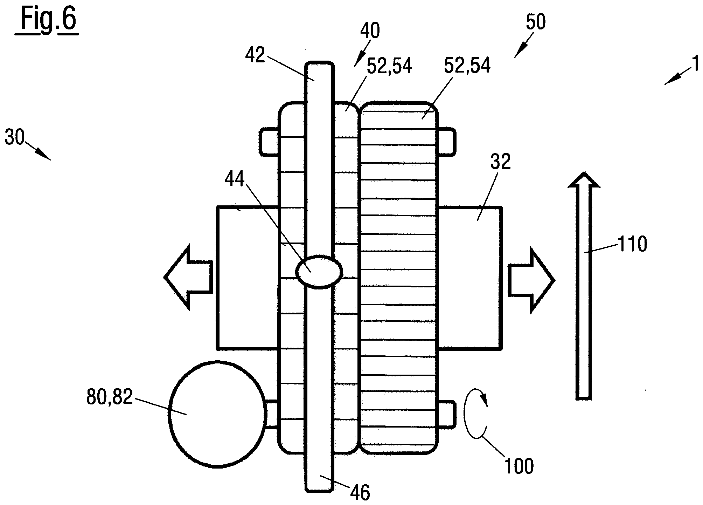

A further possible embodiment of the dispenser 1 according to the present invention is shown in Fig. 6. In this embodiment, the transfer mechanism 50 comprises two different undulating transfer surfaces 52, each provided as continuous revolving element 54. The difference of the transfer surfaces 52 can be for instance a distance of the respective prominent catches 70 along the driving direction 110, indicated by the different hatching of the depicted transfer surfaces 52.

In particular, only one of the transfer surfaces 52 is active and hence used to provide the operative connection to the toggle lever 40. The driving force 100 is provided by an electric motor element 82. Further, the driving mechanism 30, especially the transfer mechanism 50, comprises a switching mechanism 32 to change the active transfer surface 52, depicted by arrows in Fig. 6.

To facilitate the switching of the active transfer surface 52, the two transfer surfaces 52 are arranged next to each other perpendicular with respect to the driving direction 110. The switching mechanism 32 enables the user of the dispenser 1 to actively choose which transfer surface 52 is to be used and hence which effective operational connection between the trigger mechanism 80 and the driving rod 14 (not depicted) is to be established. An adaptation of the dispenser 1 according to the present invention as a whole on external constraints, for instance the medium to be applicated or the flow rate needed for the present usage of the dispenser 1, can be improved.

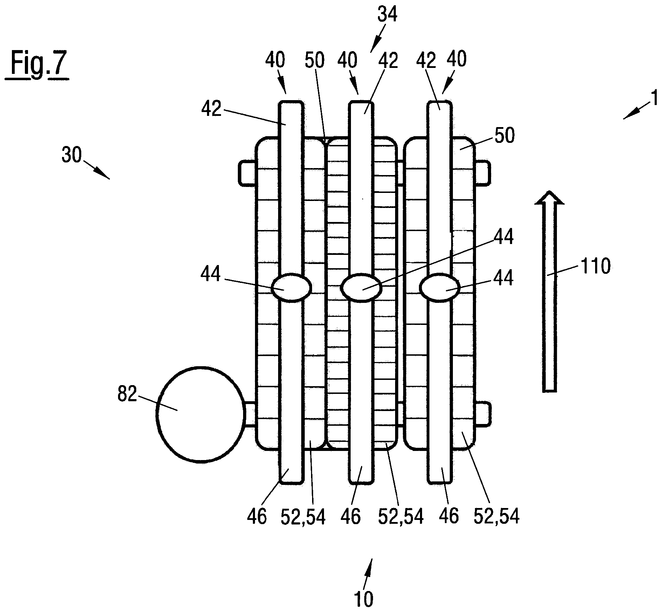

In Fig. 7, an embodiment of the dispenser 1 according to the present invention is shown which comprises a cartridge section 10 designed to receive one of a multi-component cartridge with two cartridge chambers and additionally an individual cartridges having a respective cartridge chamber. To exert pressure on the media stored in each of the cartridge chambers, three driving rods 14 are provided.

The driving mechanism 30 comprises a transmission mechanism 34 to provide an operative connection to move each driving rod 14. In particular, in the depicted embodiment the transmission mechanism 34 comprises two corresponding transfer mechanisms 50, whereby the transfer mechanisms 50 dedicated to the multi-component cartridge comprises two transfer surfaces 52, the other transfer mechanism 50 comprises a single transfer surface 52.

Each of the transfer mechanisms 50 is in operation connection with the trigger mechanism 80, and each transfer surface is in operative connection to a corresponding toggle lever 40 to actuate a pressure plate 12 (not shown) to move the corresponding driving rod 14 (not shown). In other words, more than one medium can be applicated at the same time. In particular, also a mixture of two or more media, mixed after application on the surface to be applicated or pre-mixed within a suitable mixing element of the dispenser 1, can be provided. By adapting the respective transfer surface 52 for each of the cartridge chambers, an individual flow for the respective medium in the cartridge chamber can be provided.

### List of references

- 1: Dispenser

- 10: cartridge section
- 12: pressure plate
- 14: driving rod

- 20: handle section
- 22: housing

- 30: driving mechanism
- 32: switching mechanism
- 34: transmission mechanism

- 40: toggle lever
- 42: first lever part
- 44: hinge section
- 46: second lever part
- 48: hinge axis

- 50: transfer mechanism
- 52: transfer surface
- 54: revolving element
- 56: rotatable gear

- 60: main body
- 62: first operation section
- 64: second operation section

- 70: catch
- 72: triangular tooth
- 74: first side
- 76: second side
- 78: long slot

- 80: trigger mechanism
- 82: electric motor element
- 84: trigger lever
- 86: rest position
- 88: activated position
- 90: ratchet mechanism
- 92: pin

- 100: driving force

- 110: longitudinal direction
- 112: driving direction

## Claims

1. Dispenser (1) for cartridges, comprising a cartridge section (10) for arranging the cartridge, and a handle section (20), whereby the handle section (20) comprises a housing (22) and a driving mechanism (30) arranged in the housing (22) to drive a driving rod (14) in a longitudinal direction (110) into a cartridge arranged in the cartridge section (10) to exert pressure on a medium stored in the cartridge, the driving mechanism (30) comprising:
- a toggle lever (40) with a first lever part (42), a hinge section (44) and a second lever part (46), the first lever part (42) pivotably mounted in the housing (22), the second lever part (46) in operative connection with the driving rod (14) to move the driving rod (14), and the hinge section (44) pivotably connecting the first lever part (42) and the second lever part (46) around a hinge axis (48),
- a trigger mechanism (80) to provide a driving force (100) for a movement of the driving rod (14) via the toggle lever (40), and
- a transfer mechanism (50) arranged between the trigger mechanism (80) and the toggle lever (40) providing an operative connection between the trigger mechanism (80) and the toggle lever (40),
**characterized in that**
the transfer mechanism (50) comprises an undulating transfer surface (52) with several prominent catches (70) for contacting the hinge section (44) of the toggle lever (40) to provide an operative connection to the toggle lever (40), whereby an application of the driving force (100) by the trigger mechanism (80) moves the transfer surface (52) in a driving direction (112) at least partly essentially parallel to the longitudinal direction (110) and the prominent catches (70) of the undulating transfer surface (52) repeatedly move the hinge section (44) perpendicular to the longitudinal direction (110).

2. Dispenser (1) according to claim 1,
wherein the operative connection between the second lever part (46) and the driving rod (14) is provided using a pressure plate (12) in operative connection with both the second lever part (46) and the driving rod (14), respectively.

3. Dispenser (1) according to claim 1 or 2,
wherein the transfer surface (52) is arranged at a continuous and revolving element (54), in particular wherein the continuous and revolving element (54) is a belt or a chain.

4. Dispenser (1) according to claim 3,
wherein the transfer surface (52) is arranged at a peripheral surface of a rotatable gear (56).

5. Dispenser (1) according to claim 1 or 2,
wherein the transfer surface (52) is arranged at an at least essentially even component, in particular wherein the transfer surface (52) is formed as a toothed rack.

6. Dispenser (1) according to one of the preceding claims,
wherein the prominent catches (70) are formed as triangular teeth (72), preferably wherein the triangular teeth (72) are asymmetrically formed, wherein a first side (74) of the respective triangular tooth (72) inclined forward with respect to the driving direction (112) is less steep than a second side (76) of the respective triangular tooth (72) inclined backward with respect to the driving direction (112), in particular wherein the second side (76) is perpendicular to the driving direction (112).

7. Dispenser (1) according to one of the preceding claims,
wherein the transfer mechanism (50) comprises two or more different undulating transfer surfaces (52), each comprising several prominent catches (70), wherein only one of the at least two transfer surfaces (52) is active and hence used to provide the operative connection to the toggle lever (40), further the driving mechanism (30), especially the transfer mechanism (50), comprises a switching mechanism (32) to change the active transfer surface (52), in particular wherein the at least two transfer surfaces (52) are arranged next to each other perpendicular with respect to the driving direction (112).

8. Dispenser (1) according to one of the preceding claims,
wherein the trigger mechanism (80) comprises an electric motor element (82) providing the driving force (100).

9. Dispenser (1) according to one of the preceding claims,
wherein the trigger mechanism (80) comprises a trigger lever (84) pivotably mounted in the housing (22) between a rest position (86) and an activated position (88), the trigger lever (84) providing the driving force (100), wherein in particular a ratchet mechanism (90) provides an operative connection between the trigger lever (84) and the transfer mechanism (50).

10. Dispenser (1) according to claim 9,
wherein the transfer mechanism (50) comprises a main body (60) with a first operation section (62) for providing an operative connection to the trigger lever (84) and a second operation section (64) comprising the transfer surface (52) for providing an operative connection to the toggle lever (40).

11. Dispenser (1) according to claim 10,
wherein the first operation section (62) comprises a long slot (78) and the trigger lever (84) comprises a pin (92) engaging the long slot (78) of the first operation section (62), in particular wherein a major extension of the long slot (78) is perpendicular or at least essentially perpendicular to the longitudinal direction (110) and/or the driving direction (112).

12. Dispenser (1) according to one of the preceding claims,
wherein the dispenser (1) comprises a cartridge section (10) designed to receive one of a multi-component cartridge with two or more cartridge chambers or two or more individual cartridges having a respective cartridge chamber and correspondingly two or more driving rods (14) engaging said cartridge chambers, further the driving mechanism (30) comprises a transmission mechanism (34) to provide an operative connection to move the corresponding driving rods (14).

13. Dispenser (1) according to claim 12,
wherein the transmission mechanism (34) comprises two or more corresponding transfer mechanisms (50), whereby each of the transfer mechanisms (50) is in operation connection with the trigger mechanism (80), and wherein the respective driving mechanism (30) comprises two or more corresponding toggle levers (40) in operative connection with the corresponding driving rod (14), in particular via a pressure plate (12), to move the corresponding driving rod (14), whereby each of the toggle levers (40) is in operation connection with the transfer surface (52) of one of the transfer mechanisms (50).

14. Dispenser (1) according to claim 13,
wherein at least one of the transfer mechanisms (50) comprises two or more transfer surfaces (52), whereby each of the transfer surfaces (52) is in operation connection with at least one of the toggle levers (40), in particular wherein at least two of the transfer surfaces (52) are formed differently to provide different pressures exerted on the media stored in the corresponding cartridges.

15. A method of operating a dispenser (1) for cartridges in accordance with one of the preceding claims, the dispenser (1) comprising a cartridge section (10) for arranging the cartridge and a driving mechanism (30) to drive a driving rod (14) of the dispenser (1) in a longitudinal direction (110) into a cartridge arranged in the cartridge section (10) to exert pressure on a medium stored in the cartridge, wherein the driving mechanism (30) comprises a toggle lever (40) in operative connection with the driving rod (14), in particular via a pressure plate (12), to move the driving rod (14), a trigger mechanism (80) to provide a driving force (100) for a movement of the driving rod (14) via the toggle lever (40) and a transfer mechanism (50) with an undulating transfer surface (52) with several prominent catches (70) arranged between the trigger mechanism (80) and the toggle lever (40) providing an operative connection between the trigger mechanism (80) and the toggle lever (40), **characterized by** the following steps:
a) Providing of a driving force (100) by the trigger mechanism (80),
b) Moving of the undulating transfer surface (52) in a driving direction (112) at least partly essentially parallel to the longitudinal direction (110) driven by the driving force (100) provided in step a),
c) Repeatedly displacing of a hinge section (44) of the toggle lever (40) perpendicular to the longitudinal direction (110) by a passing by of the prominent catches (70) of the moving transfer surface (52), and
d) Moving the driving rod (14) via the operative connection of the toggle lever (40) with the driving rod (14).

## Patentansprüche

1. Spender (1) für Kartuschen, umfassend einen Kartuschenabschnitt (10) zum Anordnen der Kartusche und einen Griffabschnitt (20), wobei der Griffabschnitt (20) ein Gehäuse (22) und einen Antriebsmechanismus (30) umfasst, der in dem Gehäuse (22) angeordnet ist, um eine Antriebsstange (14) in einer Längsrichtung (110) in eine Kartusche anzutreiben, die in dem Kartuschenabschnitt (10) angeordnet ist, um Druck auf ein in der Kartusche gespeichertes Medium auszuüben, wobei der Antriebsmechanismus (30) Folgendes umfasst:
- einen Kniehebel (40) mit einem ersten Hebelteil (42), einem Scharnierabschnitt (44) und einem zweiten Hebelteil (46), wobei der erste Hebelteil (42) schwenkbar in dem Gehäuse (22) montiert ist, der zweite Hebelteil (46) in Wirkverbindung mit der Antriebsstange (14) steht, um die Antriebsstange (14) zu bewegen, und der Scharnierabschnitt (44) den ersten Hebelteil (42) und den zweiten Hebelteil (46) um eine Scharnierachse (48) schwenkbar verbindet,
- einen Auslösemechanismus (80) zum Bereitstellen einer Antriebskraft (100) für eine Bewegung der Antriebsstange (14) über den Kniehebel (40) und
- einen Übertragungsmechanismus (50), der zwischen dem Auslösemechanismus (80) und dem Kniehebel (40) angeordnet ist und eine Wirkverbindung zwischen dem Auslösemechanismus (80) und dem Kniehebel (40) bereitstellt,
**dadurch gekennzeichnet, dass**
der Übertragungsmechanismus (50) eine wellenförmige Übertragungsfläche (52) mit mehreren hervorstehenden Rasten (70) zum Kontakt mit dem Scharnierabschnitt (44) des Kniehebels (40) umfasst, um eine Wirkverbindung mit dem Kniehebel (40) bereitzustellen, wobei eine Anwendung der Antriebskraft (100) durch den Auslösemechanismus (80) die Übertragungsfläche (52) in einer Antriebsrichtung (112) zumindest teilweise im Wesentlichen parallel zu der Längsrichtung (110) bewegt und die hervorstehenden Rasten (70) der wellenförmigen Übertragungsfläche (52) den Scharnierabschnitt (44) wiederholt senkrecht zu der Längsrichtung (110) bewegen.

2. Spender (1) nach Anspruch 1,
wobei die Wirkverbindung zwischen dem zweiten Hebelteil (46) und der Antriebsstange (14) unter Verwendung einer Druckplatte (12) in Wirkverbindung mit sowohl dem zweiten Hebelteil (46) als auch der Antriebsstange (14) bereitgestellt ist.

3. Spender (1) nach einem der Ansprüche 1 oder 2,
wobei die Übertragungsfläche (52) an einem kontinuierlichen und umlaufenden Element (54) angeordnet ist, wobei insbesondere das kontinuierliche und umlaufende Element (54) ein Riemen oder eine Kette ist.

4. Spender (1) nach Anspruch 3,
wobei die Übertragungsfläche (52) an einer Umfangsfläche eines drehbaren Zahnrads (56) angeordnet ist.

5. Spender (1) nach einem der Ansprüche 1 oder 2,
wobei die Übertragungsfläche (52) an einer zumindest im Wesentlichen ebenen Komponente angeordnet ist, wobei insbesondere die Übertragungsfläche (52) als eine Zahnstange ausgebildet ist.

6. Spender (1) nach einem der vorhergehenden Ansprüche,
wobei die hervorstehenden Rasten (70) als dreieckige Zähne (72) ausgebildet sind, wobei vorzugsweise die dreieckigen Zähne (72) asymmetrisch ausgebildet sind, wobei eine erste Seite (74) des jeweiligen dreieckigen Zahns (72), die in Bezug auf die Antriebsrichtung (112) nach vorne geneigt ist, weniger steil ist als eine zweite Seite (76) des jeweiligen dreieckigen Zahns (72), die in Bezug auf die Antriebsrichtung (112) nach hinten geneigt ist, wobei insbesondere die zweite Seite (76) senkrecht zu der Antriebsrichtung (112) ist.

7. Spender (1) nach einem der vorhergehenden Ansprüche,
wobei der Übertragungsmechanismus (50) zwei oder mehr verschiedene wellenförmige Übertragungsflächen (52) umfasst, die jeweils mehrere hervorstehende Rasten (70) umfassen, wobei nur eine der mindestens zwei Übertragungsflächen (52) aktiv ist und somit verwendet wird, um die Wirkverbindung mit dem Kniehebel (40) bereitzustellen, wobei ferner der Antriebsmechanismus (30), insbesondere der Übertragungsmechanismus (50), einen Schaltmechanismus (32) zum Ändern der aktiven Übertragungsfläche (52) umfasst, wobei insbesondere die mindestens zwei Übertragungsflächen (52) nebeneinander senkrecht in Bezug auf die Antriebsrichtung (112) angeordnet sind.

8. Spender (1) nach einem der vorhergehenden Ansprüche,
wobei der Auslösemechanismus (80) ein Elektromotorelement (82) umfasst, das die Antriebskraft (100) bereitstellt.

9. Spender (1) nach einem der vorhergehenden Ansprüche,
wobei der Auslösemechanismus (80) einen Auslösehebel (84) umfasst, der schwenkbar in dem Gehäuse (22) zwischen einer Ruheposition (86) und einer aktivierten Position (88) montiert ist, wobei der Auslösehebel (84) die Antriebskraft (100) bereitstellt, wobei insbesondere ein Ratschenmechanismus (90) eine Wirkverbindung zwischen dem Auslösehebel (84) und dem Übertragungsmechanismus (50) bereitstellt.

10. Spender (1) nach Anspruch 9,
wobei der Übertragungsmechanismus (50) einen Hauptkörper (60) mit einem ersten Betätigungsabschnitt (62) zum Bereitstellen einer Wirkverbindung mit dem Auslösehebel (84) und einem zweiten Betätigungsabschnitt (64) umfasst, der die Übertragungsfläche (52) zum Bereitstellen einer Wirkverbindung mit dem Kniehebel (40) umfasst.

11. Spender (1) nach Anspruch 10,
wobei der erste Betätigungsabschnitt (62) einen Langschlitz (78) umfasst und der Auslösehebel (84) einen Stift (92) umfasst, der in den Langschlitz (78) des ersten Betätigungsabschnitts (62) eingreift, wobei insbesondere eine Hauptausdehnung des Langschlitzes (78) senkrecht oder zumindest im Wesentlichen senkrecht zu der Längsrichtung (110) und/oder der Antriebsrichtung (112) ist.

12. Spender (1) nach einem der vorhergehenden Ansprüche,
wobei der Spender (1) einen Kartuschenabschnitt (10) umfasst, der dazu ausgelegt ist, eine von einer Mehrkomponentenkartusche mit zwei oder mehr Kartuschenkammern oder zwei oder mehr einzelnen Kartuschen, die jeweils eine Kartuschenkammer aufweisen, und entsprechend zwei oder mehr Antriebsstangen (14), die in die Kartuschenkammern eingreifen, aufzunehmen, wobei ferner der Antriebsmechanismus (30) einen Übertragungsmechanismus (34) umfasst, um eine Wirkverbindung bereitzustellen, um die entsprechenden Antriebsstangen (14) zu bewegen.

13. Spender (1) nach Anspruch 12,
wobei der Übertragungsmechanismus (34) zwei oder mehr entsprechende Übertragungsmechanismen (50) umfasst, wobei jeder der Übertragungsmechanismen (50) in Wirkverbindung mit dem Auslösemechanismus (80) steht, und wobei der jeweilige Antriebsmechanismus (30) zwei oder mehr entsprechende Kniehebel (40) in Wirkverbindung mit der entsprechenden Antriebsstange (14), insbesondere über eine Druckplatte (12), umfasst, um die entsprechende Antriebsstange (14) zu bewegen, wobei jeder der Kniehebel (40) in Wirkverbindung mit der Übertragungsfläche (52) eines der Übertragungsmechanismen (50) steht.

14. Spender (1) nach Anspruch 13,
wobei mindestens einer der Übertragungsmechanismen (50) zwei oder mehr Übertragungsflächen (52) umfasst, wobei jede der Übertragungsflächen (52) in Wirkverbindung mit mindestens einem der Kniehebel (40) steht, wobei insbesondere mindestens zwei der Übertragungsflächen (52) unterschiedlich ausgebildet sind, um unterschiedliche Drücke bereitzustellen, die auf die in den entsprechenden Kartuschen gespeicherten Medien ausgeübt werden.

15. Verfahren zum Betreiben eines Spenders (1) für Kartuschen nach einem der vorhergehenden Ansprüche, wobei der Spender (1) einen Kartuschenabschnitt (10) zum Anordnen der Kartusche und einen Antriebsmechanismus (30) zum Antreiben einer Antriebsstange (14) des Spenders (1) in einer Längsrichtung (110) in eine Kartusche umfasst, die in dem Kartuschenabschnitt (10) angeordnet ist, um Druck auf ein in der Kartusche gespeichertes Medium auszuüben, wobei der Antriebsmechanismus (30) einen Kniehebel (40) in Wirkverbindung mit der Antriebsstange (14), insbesondere über eine Druckplatte (12), um die Antriebsstange (14) zu bewegen, einen Auslösemechanismus (80) zum Bereitstellen einer Antriebskraft (100) für eine Bewegung der Antriebsstange (14) über den Kniehebel (40) und einen Übertragungsmechanismus (50) mit einer wellenförmigen Übertragungsfläche (52) mit mehreren hervorstehenden Rasten (70) umfasst, die zwischen dem Auslösemechanismus (80) und dem Kniehebel (40) angeordnet sind und eine Wirkverbindung zwischen dem Auslösemechanismus (80) und dem Kniehebel (40) bereitstellen, **gekennzeichnet durch** die folgenden Schritte:
a) Bereitstellen einer Antriebskraft (100) durch den Auslösemechanismus (80),
b) Bewegen der wellenförmigen Übertragungsfläche (52) in einer Antriebsrichtung (112) zumindest teilweise im Wesentlichen parallel zu der Längsrichtung (110), die durch die in Schritt a) bereitgestellte Antriebskraft (100) angetrieben wird,
c) wiederholtes Verschieben eines Scharnierabschnitts (44) des Kniehebels (40) senkrecht zu der Längsrichtung (110) durch Vorbeiführen der hervorstehenden Rasten (70) der sich bewegenden Übertragungsfläche (52), und
d) Bewegen der Antriebsstange (14) über die Wirkverbindung des Kniehebels (40) mit der Antriebsstange (14).

## Revendications

1. Distributeur (1) pour cartouches, comprenant une section à cartouche (10) destinée à agencer la cartouche, une section à poignée (20), la section à poignée (20) comprenant un boîtier (22) et un mécanisme d'entraînement (30) agencé dans le boîtier (22) pour entraîner une tige d'entraînement (14) dans une direction longitudinale (110) jusque dans une cartouche agencée dans la section à cartouche (10) afin d'exercer une pression sur un fluide stocké dans la cartouche, le mécanisme d'entraînement (30) comprenant :
- un levier à bascule (40) avec une première partie de levier (42), une section à charnière (44) et une seconde partie de levier (46), la première partie de levier (42) étant montée de manière pivotante dans le boîtier (22), la seconde partie de levier (46) étant en connexion fonctionnelle avec la tige d'entraînement (14) pour déplacer la tige d'entraînement (14), et la section à charnière (44) connectant de manière pivotante la première partie de levier (42) et la seconde partie de levier (46) autour d'un axe de charnière (48),
- un mécanisme déclencheur (80) pour fournir une force d'entraînement (100) en vue d'un déplacement de la tige d'entraînement (14) via le levier à bascule (40), et
- un mécanisme de transfert (50) agencé entre le mécanisme déclencheur (80) et le levier à bascule (40), assurant une connexion fonctionnelle entre le mécanisme déclencheur (80) et le levier à bascule (40), **caractérisé en ce que**
le mécanisme de transfert (50) comprend une surface de transfert à ondulations (52) présentant plusieurs crans proéminents (70) pour venir en contact avec la section à charnière (44) du levier à bascule (40) afin d'assurer une connexion fonctionnelle avec le levier à bascule (40), moyennant quoi une application de la force d'entraînement (100) via le mécanisme déclencheur (80) déplace la surface de transfert (52) dans une direction d'entraînement (112) au moins en partie essentiellement parallèlement à la direction longitudinale (110), et les crans proéminents (70) de la surface de transfert à ondulations (52) déplacent de manière répétée la section à charnière (44) perpendiculairement à la direction longitudinale (110).

2. Distributeur (1) selon la revendication 1,
dans lequel la connexion fonctionnelle entre la seconde partie de levier (46) et la tige d'entraînement (14) est assurée à l'aide d'une plaque de pression (12) en connexion fonctionnelle avec à la fois la seconde partie de levier (46) et la tige d'entraînement (14), respectivement.

3. Distributeur (1) selon la revendication 1 ou 2,
dans lequel la surface de transfert (52) est agencée au niveau d'un élément continu et tournant (54), en particulier dans lequel l'élément continu et tournant (54) est une courroie ou une chaîne.

4. Distributeur (1) selon la revendication 3,
dans lequel la surface de transfert (52) est agencé au niveau d'une surface périphérique d'un engrenage rotatif (56).

5. Distributeur (1) selon la revendication 1 ou 2,
dans lequel la surface de transfert (52) est agencée au niveau d'un composant en moins sensiblement plan, en particulier dans lequel la surface de transfert (52) est formée en tant que crémaillère à dents.

6. Distributeur (1) selon l'une quelconque des revendications précédentes, dans lequel les crans proéminents (70) sont formés en tant que dents triangulaires (72), de préférence dans lequel les dents triangulaires (72) sont formées de manière asymétrique, dans lequel un premier côté (74) de la dent triangulaire respective (72) incliné vers l'avant par rapport à la direction d'entraînement (112) est moins pentu qu'un second côté (76) de la dent triangulaire respective (72) incliné vers l'arrière par rapport à la direction d'entraînement (112), en particulier dans lequel le second côté (76) est perpendiculaire à la direction d'entraînement (112).

7. Distributeur (1) selon l'une quelconque des revendications précédentes, dans lequel le mécanisme de transfert (50) comprend deux ou plusieurs surfaces de transfert à ondulations différentes (52), chacune comprenant différents crans proéminents (70), dans lequel une seule desdites au moins deux surfaces de transfert (52) est active et donc utilisée pour assurer la connexion fonctionnelle avec le levier à bascule (40), le mécanisme d'entraînement (30), plus particulièrement le mécanisme de transfert (50), comprenant en outre un mécanisme de commutation (32) pour changer la surface de transfert active (52), en particulier dans lequel lesdites au moins deux surfaces de transfert (52) sont agencées l'une à côté de l'autre perpendiculairement à la direction d'entraînement (112).

8. Distributeur (1) selon l'une quelconque des revendications précédentes, dans lequel le mécanisme déclencheur (80) comprend un élément à moteur électrique (82) fournissant la force d'entraînement (100).

9. Distributeur (1) selon l'une quelconque des revendications précédentes, dans lequel le mécanisme déclencheur (80) comprend un levier déclencheur (84) monté de manière pivotante dans le boîtier (22) entre une position de repos (86) et une position activée (88), le levier déclencheur (84) fournissant la force d'entraînement (100), dans lequel en particulier un mécanisme à rochet (90) assure une connexion fonctionnelle entre le levier déclencheur (84) et le mécanisme de transfert (50).

10. Distributeur (1) selon la revendication 9,
dans lequel le mécanisme de transfert (50) comprend un corps principal (60) avec une première section de fonctionnement (62) pour assurer une connexion fonctionnelle avec le levier déclencheur (84), et une seconde section de fonctionnement (64) comprenant la surface de transfert (52) pour assurer une connexion fonctionnelle avec le levier à bascule (40).

11. Distributeur (1) selon la revendication 10,
dans lequel la première section de fonctionnement (62) comprend une fente longue (78) et le levier déclencheur (84) comprend une broche (92) s'engageant avec la fente longue (78) de la première section de fonctionnement (62), en particulier dans lequel une extension majeure de la fente longue (78) est perpendiculaire ou au moins sensiblement perpendiculaire à la direction longitudinale (110) et/ou à la direction d'entraînement (112).

12. Distributeur (1) selon l'une quelconque des revendications précédentes, dans lequel le distributeur (1) comprend une section à cartouche (10) conçu pour recevoir l'une d'une cartouche à composants multiples avec deux ou plusieurs chambres de cartouche, ou deux ou plusieurs cartouches individuelles ayant une chambre de cartouche respective et correspondant à deux ou plusieurs tiges d'entraînement (14) engageant lesdites chambres de cartouche, le mécanisme d'entraînement (30) comprenant en outre un mécanisme de transmission (34) pour assurer une connexion fonctionnelle afin de déplacer les tiges d'entraînement correspondantes (14).

13. Distributeur (1) selon la revendication 12,
dans lequel le mécanisme de transmission (34) comprend deux ou plusieurs mécanismes de transfert correspondants (50), moyennant quoi chacun des mécanismes de transfert (50) est en connexion fonctionnelle avec le mécanisme déclencheur (80), et dans lequel le mécanisme d'entraînement respectif (30) comprend deux ou plusieurs leviers à bascule correspondants (40) en connexion fonctionnelle avec la tige d'entraînement correspondante (14), en particulier via une plaque de pression (12), pour déplacer la tige d'entraînement correspondante (14), moyennant quoi chacun des leviers à bascule (40) est en connexion fonctionnelle avec la surface de transfert (52) de l'un des mécanismes de transfert (50).

14. Distributeur (1) selon la revendication 13,
dans lequel l'un au moins des mécanismes de transfert (50) comprend deux ou plusieurs surfaces de transfert (52), moyennant quoi chacune des surfaces de transfert (52) est en connexion fonctionnelle avec l'un au moins des leviers à bascule (40), en particulier dans lequel au moins deux des surfaces de transfert (52) sont formées de manière différente pour fournir des pressions différentes exercées sur le fluide stocké dans les cartouches correspondantes.

15. Procédé de fonctionnement d'un distributeur (1) pour cartouches selon l'une des revendications précédentes, le distributeur (1) comprenant une section à cartouche (10) destinée à agencer la cartouche, et un mécanisme d'entraînement (30) pour entraîner une tige d'entraînement (14) du distributeur (1) dans une direction longitudinale (110) jusque dans une cartouche agencée dans la section à cartouche (10) afin d'exercer une pression sur un fluide stocké dans la cartouche, dans lequel le mécanisme d'entraînement (30) comprend un levier à bascule (40) en connexion fonctionnelle avec la tige d'entraînement (14) en particulier via une plaque de pression (12), pour déplacer la tige d'entraînement (14), un mécanisme déclencheur (80) permettant de fournir une force d'entraînement (100) pour un déplacement de la tige d'entraînement (14) via le levier à bascule (40), et un mécanisme de transfert (50) avec une surface de transfert à ondulations (52) présentant plusieurs crans proéminents (70) agencée entre le mécanisme déclencheur (80) et le levier à bascule (40), assurant une connexion fonctionnelle entre le mécanisme déclencheur (80) et le levier à bascule (40), **caractérisé par** les étapes suivantes :
a) fournir une force d'entraînement (100) via le mécanisme déclencheur (80),
b) déplacer la surface de transfert à ondulations (52) dans une direction d'entraînement (112) au moins en partie essentiellement parallèlement à la direction longitudinale (110) entraînée par la force d'entraînement (100) fournie dans l'étape a),
c) déplacer de manière répétée une section à charnière (44) du levier à bascule (40) perpendiculairement à la direction longitudinale (110) via un passage par les crans proéminents (70) de la surface de transfert en déplacement (52), et
d) déplacer la tige d'entraînement (14) via la connexion fonctionnelle du levier à bascule (40) avec la tige d'entraînement (14).
